# EUROPEAN PATENT SPECIFICATION

(11) **EP 1 362 079 B1**
(45) Date of publication and mention of the grant of the patent: **08.06.2005**
(21) Application number: 00989012.0
(22) Date of filing: 22.12.2000
(51) Int. Cl.: C08L 23/16, C08K 7/10, C08K 3/00, C08L 23/10, C08K 3/34

(54) **POLYPROPYLENE RESIN COMPOSITION WITH IMPROVED SURFACE HARDNESS AND SCRATCH RESISTANCE PROPERTIES**
POLYPROPYLENHARZZUSAMMENSETZUNG MIT VERBESSERTER OBERFLÄCHENHÄRTE UND KRATZFESTIGKEIT
COMPOSITION DE RESINE DE POLYPROPYLENE DONT LA DURETE SUPERFICIELLE ET LA RESISTANCE AUX RAYURES SONT AMELIOREES

(43) Date of publication of application: 19.11.2003
(73) Proprietor: Samsung General Chemicals Co., Ltd., Seosan-shi, Chungcheongnam Province 356-870 (KR)
(72) Inventor: Kim, Sok-Won, Taejon 302-734 (KR); Kim, Young-Won, Taejon 305-728 (KR); Chae, Kyung-Suk, Taejon 305-728 (KR)
(74) Representative: Hallybone, Huw George
(86) International application number: PCT/KR2000/001524
(87) International publication number: WO 2002/051933

(56) References cited:
- JP-A- 1 103 665
- JP-A- 10 017 734
- JP-A- 58 042 639
- JP-A- 61 062 543
- KR-A- 92 012 291
- US-A- 5 145 892

## Description

### TECHNICAL FIELD

The present invention relates to a polypropylene resin composition with improved surface hardness and scratch resistance. More particularly, the invention relates to a polypropylene resin composition having excellent appearance, molding processability, dimensional stability, and especially improved surface hardness and scratch resistance, which is prepared by using polypropylene resin and inorganic filler of needle type as a filler, and by adding modified polypropylene grafted with maleic anhydride and dispersing agent

### BACKGROUND ART

Generally Polypropylene resin compositions have wide range of use as a raw material of injection molding products since they have excellent processability and physical properties over cost. And many efforts have been made to improve the thermal resistance, flexural modulus, tensile strength and dimensional stability of the product by adding inorganic filler or other reinforcing additives to the resin composition, and these resin compositions are now commercially available. Especially, the polypropylene composite material containing talc which is inexpensive and has excellent recycling properties is widely used. However, it is known that as the content of talc increases, flexural rigidity and thermal resistance improves, but appearance becomes coarse and surface hardness and scratch resistance becomes bad. Therefore, the polypropylene resin filled with talc has the problem that the products which use this resin, such as inner members of automobile or home interior components in which appearance is an important feature, are liable to scratching.

Therefore, many methods are being proposed to solve these problems. For example, Korean Patent Publication No. 97-3307 discloses a resin composition having improved binding force of polypropylene matrix/rubber component/inorganic filler by using, for example, inorganic filler treated with a amino silane coupling agent and ethylene-α-olefin copolymer rubber modified with ester of α, β-unsaturated acid having epoxide functional group. And, Korean Patent Publication No. 90-641 discloses a resin composition having enforced scratch resistance and impact resistance by improving binding force of polypropylene matrix/rubber component by using the ethylene-α-olefin copolymer rubber modified with ester of α,β-unsaturated acid having epoxide functional group, and polyolefin modified with unsaturated carboxylic acid or derivative thereof. These resin compositions, however, have problem that flexural rigidity decreases and fluidity of the resin is drastically reduced as the rubber component is added. While Japanese laid open Patent publication *Sho* 53-118055 discloses resin composition with improved scratch resistance by using glass fiber or flaky mica, the use of glass fiber and flaky mica causes the problem of reduced fluidity of resin and bad surface appearance of molded products. Also the method of improving scratch resistance by limiting the content of ethylene in the polypropylene resin to a certain range, as disclosed in Japanese laid open Patent publication *Sho* 56-88447, has the disadvantage that the impact strength decreases since the content of ethylene which has the role of absorbing impact becomes insufficient in case the content of ethylene is limited.

### DISCLOSURE OF INVENTION

The object of the invention is to solve the problems of prior art polypropylene resin compositions as mentioned above and to provide a polypropylene resin composition which has good processability during injection molding, good appearance after processing, and also has excellent dimensional stability, thermal and mechanical properties, and especially improved surface hardness and scratch resistance. To accomplish the object of the present invention, wollastonite is used as an inorganic filler, modified polypropylene grafted with maleic anhydride having polar functional group is added to increase the adhesiveness between polypropylene and wollastonite, and appropriate dispersing agent is used to prevent the agglomeration of inorganic fillers due to the increase in the content of inorganic filler, which causes inhomogeneity of physical properties and bad appearance.

The polypropylene resin composition of the present invention with improved surface hardness and scratch resistance comprises 50∼87.9% by weight of polypropylene resin, 10∼40 % by weight of inorganic filler wollastonite, 2∼10% by weight of modified polypropylene which is grafted with maleic anhydride and 0.1∼1% by weight of dispersing agent

The polypropylene resin used in the present invention has 5∼40g/10min (ASTM D1238, 230°C) of melt index(MI), and it is preferably homo polypropylene, or block copolymer or random co-polymer containing ethylene not more than 25 mole %, or mixture thereof. When melt index is below 5g/10min, processability of injection molding decreases, and when melt index is above 40g/10min, impact strength is drastically decreased, and when the content of ethylene in polypropylene copolymer is above 25mole%, rigidity is reduced.

The content of wollastonite, an inorganic filler used in the present invention, is 10∼40% by weight When the content of wollastonite is less than 10% by weight, the effect of improving physical properties such as thermal resistance, tensile strength and flexural rigidity is lowered. When the content is above 40% by weight, apearance becomes bad due to the generation of flow mark during injection molding, and impact strength is lowered. The appropriate wollastonite has chemical composition of CaSiO₃, 4∼5 of Mohr's hardness, more than 1500°C of melting point, 2∼50 of aspect ratio, needle type of particle shape and 3∼50µm of average particle size. When the aspect ratio is less than 2, there is a problem of reduced rigidity and when the ratio is more than 50, appearance and impact physical properties is dropped. When the average particle size is smaller than 3µm, the productivity of extrusion processing is lowered by the aggregation of particles and when the size is larger than 50µm appearance and impact physical properties are lowered.

The modified polypropylene used in the present invention is grafted with maleic anhydride, and ratio of combined maleic anhydride is 0.3% by weight or more. And the content of the modified polypropylene is 2∼10% by weight. When the content of the modified polypropylene in the composition of the present invention is less than 2% by weight, the adhesiveness between polypropylene and wollastonite is weakened, and when the content is more than 10% by weight, manufacturing cost rises and basic physical properties of polypropylene resin is dropped.

The content of dispersing agent used in the present invention is 0.1∼1% by weight. When the content is less than 0.1% by weight, dispersing effect on the inorganic filler is not sufficiently obtained, and when the content is more than 1% by weight, the appearance of final molded product becomes bad due to the carbonization of additives and the transfer of additives to the surface of molded product after molding. The dispersing agent of the present invention may be calcium stearate, zinc stearate or magnesium stearate, which is used dispersion or neutralization of remaining catalyst.

Conventional method for preparing polypropylene resin composition can be used in the preparation of the composition of the present invention, and, when necessary, various additives can be added to the mixing machine such as Kneader, roll and Bambary mixer, and single or twin screw extruder.

### BEST MODE FOR CARRYING OUT THE INVENTION

The present invention is further described in detail by means of the examples and comparative examples as below but should not be confined or limited to these examples.

In the examples and comparative examples, each raw material is mixed by using mixer, the content as shown in tables 1 and 2, and the compositions are prepared in pellet by melt mixing by using twin screw extruder. Then test samples are produced by using injection molding machine (140tons) and test is performed by the following methods.

### <Methods for testing physical properties>

1. Surface hardness: ASTM D785
   (Suitable for interior member of automobile if the surface hardness(R-Scale) is not less than 95)
2. Scratch resistance: Pencil hardness test
   (Suitable for interior member of automobile if the pencil hardness is not less than 2B)
3. Appearance : The molded sample with 300 × 90 × 3 mm of size is visually evaluated on flow mark and surface roughness
4. Tensile strength: ASTM D638
5. Flexural modulus: ASTM D790
6. Izod impact strength: ASTM D256

**[Table 1]**

| | (unit % by weight) | | | | |
|---|---|---|---|---|---|
| | Example | | | | |
| | 1 | 2 | 3 | 4 | 5 |
| Polypropylene resin¹⁾ | 87 | 80 | 75 | 63 | 50 |
| Wollastonite²⁾ | 10 | 15 | 20 | 30 | 40 |
| Modified polyproylene³⁾ | 5 | 5 | 5 | 7 | 10 |
| Calcium stearate | 0.3 | 0.5 | 0.6 | 0.8 | 0.9 |
| Surface hardness (R-Scale) | 100 | 101 | 98 | 98 | 99 |
| Result | Suitable | Suitable | Suitable | Suitable | Suitable |
| Scratch resistance | 1B | 1∼2B | 1∼2B | 2B | 2B |
| Result | Suitable | Suitable | Suitable | Suitable | Suitable |
| Appearance | good | good | good | good | good |
| Tensile strength (kg/cm2) | 293 | 298 | 295 | 294 | 291 |
| Flexural modulus | 18000 | 20500 | 23000 | 28000 | 34000 |
| Room temperature Izod impact strength | 5.5 | 4.6 | 4.3 | 3.9 | 3.6 |

| | | | | | |
|---|---|---|---|---|---|
| *1) Samsung general chemicals co., BJ700 | | | | | |
| 2) average size of particle: 12µm | | | | | |
| 3) Samsung General Chemicals co., CP4673T | | | | | |

**[Table 2]**

| | (unit: % by weight) | | | | | | | |
|---|---|---|---|---|---|---|---|---|
| | Comparative example | | | | | | | |
| | 1 | 2 | 3 | 4 | 5 | 6 | 7 | 8 |
| Polypropylene¹⁾ resin | 80 | 55 | 60 | 80 | 75 | 60 | 80 | 70 |
| Talc²⁾ | 20 | 40 | 40 | - | - | - | - | - |
| Mica³⁾ | - | - | - | 20 | 20 | 40 | - | - |
| Calcium stearate | 0.5 | 0.5 | 0.5 | 0.3 | 03 | 03 | 0.3 | 2 |
| Wollastonite⁴⁾ | - | - | - | - | - | - | 20 | 30 |
| Modified polypropylene⁵⁾ | - | 5 | - | - | 5 | - | - | - |
| Surface hardness (R-Scale) | 85 | 92 | 81 | 92 | 98 | 88 | 94 | 91 |
| Result | NS | NS | NS | NS | S | NS | NS | NS |
| Scratch resistance | 3∼4B | 3B | 4B | 2∼3B | 2B | 3B | 2∼3B | 3B |
| Result | NS | NS | NS | NS | S | NS | NS | NS |
| Appearance | good | normal | normal | bad | bad | bad | good | bad |
| Tensile strength (kg/cm²) | 280 | 290 | 260 | 279 | 298 | 268 | 275 | 270 |
| Flexural modulus (kg/cm²) | 22000 | 35000 | 33000 | 27000 | 29000 | 33000 | 19000 | 24000 |
| Room temperature izod impact strength(kg.cm/cm) | 4.5 | 3.8 | 3.2 | 5.3 | 5.5 | 3.4 | 4.0 | 3.5 |

| | | | | | | | | |
|---|---|---|---|---|---|---|---|---|
| 1) Samsung General Chemicals co., BJ 700 | | | | | | | | |
| 2) Average size of particle: 10µm | | | | | | | | |
| 3) Average size of particle: 200µm | | | | | | | | |
| 4) Average size of particle: 12µm | | | | | | | | |
| 5) Samsung General Chemicals co., CP4673T S: Suitable NS: Not suitable | | | | | | | | |

As shown in Tables 1 and 2, surface hardness and scratch resistance of the composition of the examples are better than those of the composition of the comparative examples.

As described above, the polypropylene resin composition of the present invention uses wollastonite as a needle type inorganic filler for polypropylene resin, adds modified polypropylene grafted with maleic anhydride to improve adhesiveness between the polypropylene resin and wollastonite, and also uses dispersing agent to improve dispersability of inorganic filler in resin composition. The product molded from the resin composition of the present invention has improved common physical properties, good appearance, and especially surface hardness and scratch resistance.

## Claims

1. A polypropylene resin composition comprising 50∼87.9% by weight of polypropylene resin, 10∼40% by weight of wollastonite, 2∼10% by weight of modified polypropylene and 0.1∼1% by weight of dispersing agent

2. The polypropylene resin composition according to claim 1, wherein said polypropylene resin is homo polypropylene, or block copolymer or random copolymer containing ethylene not more than 25mole%, or mixture thereof, and wherein said polypropylene resin has melt index of 5∼40g/10min (ASTM D1238,230°C).

3. The polypropylene resin composition according to claim 1, wherein said wollastonite has chemical composition of CaSiO₃, 4∼5 of Mohr's hardness, more than 1500°C of melting point, 2∼50 of aspect ratio and 3∼50micrometers of average particle size.

4. The polypropylene resin composition according to claim 1, wherein said modified polypropylene is a polypropylene grafted with maleic anhydride with not less than 0.3% by weight of component ratio of maleic anhydride.

5. The polypropylene resin composition according to claim 1, wherein said dispersing agent is calcium stearate, zinc stearate, or magnesium stearate.

## Patentansprüche

1. Polypropylenharzzusammensetzung umfassend 50-87,9 Gew.-% Polypropylenharz, 10-40 Gew.-% Wollastonit, 2-10 Gew.-% modifiziertes Polypropylen und 0,1-1 Gew.-% Dispersionsmittel.

2. Polypropylenharzzusammensetzung nach Anspruch 1, wobei das Polypropylenharz Homopolypropylen oder ein Blockcopolymer oder ein statistisches Copolymer, das nicht mehr als 25 Mol-% Ethylen enthält, oder ein Gemisch davon ist und wobei das Polypropylenharz einen Schmelzindex von 5-40 g/10 min (ASTM D1238, 230 °C) aufweist.

3. Polypropylenharzzusammensetzung nach Anspruch 1, wobei der Wollastonit die chemische Zusammensetzung CaSiO₃, die Mohrsche Härte 4-5, einen Schmelzpunkt von über 1500 °C, ein Aspektenverhältnis von 2-50 und eine mittlere Teilchengröße von 3-50 µm aufweist.

4. Polypropylenharzzusammensetzung nach Anspruch 1, wobei das modifizierte Polypropylen ein Polypropylen ist, das mit nicht mehr als einem Verhältnis von 0,3 Gew.-% an MaleinsäureanhydridKomponente gepfropft ist.

5. Polypropylenharzzusammensetzung nach Anspruch 1, wobei das Dispersionsmittel Calciumstearat, Zinkstearat oder Magnesiumstearat ist.

## Revendications

1. Composition de résine de polypropylène comprenant de 50 à 87,9 % en poids d'une résine de polypropylène, de 10 à 40 % en poids de wollastonite, de 2 à 10 % en poids de polypropylène modifié et de 0,1 à 1 % en poids d'agent de dispersion.

2. Composition de résine de polypropylène selon la revendication 1, dans laquelle ladite résine de polypropylène est un homopolypropylène ou un copolymère séquencé ou un copolymère aléatoire contenant pas plus de 25 % en moles d'éthylène, ou un mélange de ceux-ci, et dans laquelle ladite résine de polypropylène a un indice de fluidité à chaud de 5 à 40 g/10 min (ASTM D1238, 230 °C).

3. Composition de résine de polypropylène selon la revendication 1, dans laquelle ladite wollastonite a une composition chimique de CaSiO₃, une dureté de Mohr de 4 à 5, un point de fusion supérieur à 1 500 °C, un rapport de forme de 2 à 50 et une granulométrie moyenne de 3 à 50 micromètres.

4. Composition de résine de polypropylène selon la revendication 1, dans laquelle ledit polypropylène modifié est un polypropylène greffé avec de l'anhydride maléique selon un rapport du composant d'anhydride maléique non inférieur à 0,3 % en poids.

5. Composition de résine de polypropylène selon la revendication 1, dans laquelle ledit agent de dispersion est le stéarate de calcium, le stéarate de zinc ou le stéarate de magnésium.
